# EUROPEAN PATENT APPLICATION

(11) **EP 4 497 786 A1**
(43) Date of publication of application: **29.01.2025**
(21) Application number: 23774750.6
(22) Date of filing: 16.03.2023
(51) Int. Cl.: C08L 101/00, B29B 7/00, C08J 3/12, C08L 27/18

(54) **RESIN COMPOSITION AND MOLDED BODY**

(30) Priority: 22.03.2022 JP 2022045241
(71) Applicant: AGC INC., Chiyoda-ku, Tokyo 1008405 (JP)
(72) Inventor: OCHI, Yousuke, Tokyo 100-8405 (JP); ABE, Masatoshi, Tokyo 100-8405 (JP); SASAKI, Toru, Tokyo 100-8405 (JP); YODOGAWA, Masahide, Tokyo 100-8405 (JP)
(74) Representative: Müller-Boré & Partner Patentanwälte PartG mbB
(86) International application number: PCT/JP2023/010356
(87) International publication number: WO 2023/182154

(57) **Abstract**

To provide a resin composition formable into a molded body excellent in friction properties and heat resistance and a molded body.

A resin composition including: a non-fluorinated thermoplastic resin; a first tetrafluoroethylene polymer; and a second tetrafluoroethylene polymer having a melting point higher than or equal to 260°C and lower than a melting point of the first tetrafluoroethylene polymer, wherein, relative to the total mass of the non-fluorinated thermoplastic resin, the first tetrafluoroethylene polymer and the second tetrafluoroethylene polymer, the content of the first tetrafluoroethylene polymer is from 4.0 to 32.0 mass%, and the content of the second tetrafluoroethylene polymer is from 0.5 to 10.0 mass%, and wherein the resin composition is obtained by melt-mixing a mixed powder of first particles of the first tetrafluoroethylene polymer and second particles of the second tetrafluoroethylene polymer with a powder of the non-fluorinated thermoplastic resin.

## Description

### TECHNICAL FIELD

The present invention relates to a resin composition and a molded body.

### BACKGROUND ART

Fluorinated resins such as polytetrafluoroethylene are excellent in various properties including heat resistance, insulation, chemical resistance, water repellency and friction properties such as wear resistance, and are used in a wide range of fields such as a food industry field, a chemical industry field, an auto parts field, a semiconductor field etc. by taking advantages of these properties.

When a fluorinated resin is mixed with a non-fluorinated heat-resistant thermoplastic resin called a super engineering plastic and then subjected to forming, it is easy to obtain a molded body highly equipped with the properties of both the resins (see Patent Document 1 listed below).

### PRIOR ART DOCUMENTS

### PATENT DOCUMENTS

Patent Document 1: JP-A-2013-227504

### DISCLOSURE OF INVENTION

### TECHNICAL PROBLEM

However, fluorinated resins are poor in affinity with other resins and are poor in miscibility. This tendency is pronounced in the case of a fluorinated resin containing a high proportion of tetrafluoroethylene units and having a high melting point or high heat resistance. It has not been easy to impart the properties such as wear resistance of fluorinated resins to other resins such as non-fluorinated thermoplastic resins.

Further, it has been required that resin parts for vehicles, aircrafts and the like are reduced in friction from the viewpoint of improvement in fuel efficiency and quietness.

It is an object of the present invention to provide a resin composition formable into a molded body excellent in friction properties such as wear resistance and heat resistance, and a molded body.

### SOLUTION TO PROBLEM

The present invention includes the following aspects.
[1] A resin composition, comprising: a non-fluorinated thermoplastic resin; a first tetrafluoroethylene polymer; and a second tetrafluoroethylene polymer having a melting point higher than or equal to 260°C and lower than a melting point of the first tetrafluoroethylene polymer,
   wherein, relative to the total mass of the non-fluorinated thermoplastic resin, the first tetrafluoroethylene polymer and the second tetrafluoroethylene polymer, the content of the first tetrafluoroethylene polymer is from 4.0 to 32.0 mass%, and the content of the second tetrafluoroethylene polymer is from 0.5 to 10.0 mass%, and
   wherein the resin composition is obtained by melt-mixing a mixed powder of first particles of the first tetrafluoroethylene polymer and second particles of the second tetrafluoroethylene polymer with a powder of the non-fluorinated thermoplastic resin.
[2] The resin composition according to [1], wherein the first tetrafluoroethylene polymer is polytetrafluoroethylene.
[3] The resin composition according to [1] or [2], wherein the second tetrafluoroethylene polymer contains units based on at least one kind of comonomer selected from the group consisting of perfluoro(alkyl vinyl ether), hexafluoropropylene and fluoroalkylethylene.
[4] The resin composition according to any one of [1] to [3], wherein the second tetrafluoroethylene polymer has an oxygen-containing polar group.
[5] The resin composition according to any one of [1] to [4], wherein the melting point of the first tetrafluoroethylene polymer is higher than 320°C and lower than or equal to 380°C, and the melting point of the second tetrafluoroethylene polymer is higher than or equal to 260°C and lower than 320°C.
[6] The resin composition according to any one of [1] to [5], wherein the difference between the melting point of the first tetrafluoroethylene polymer and the melting point of the second tetrafluoroethylene polymer is from 20°C to 60°C.
[7] The resin composition according to any one of [1] to [6], wherein the average particle size of the first particles is from 1 to 100 µm.
[8] The resin composition according to any one of [1] to [7], wherein the average particle size of the first particles is greater than the average particle size of the second particles.
[9] The resin composition according to any one of [1] to [8], wherein the ratio of the average particle size of the first particles to the average particle size of the second particles is from 2 to 50 in terms of a particle size ratio as expressed by first particles/second particles.
[10] The resin composition according to any one of [1] to [9], wherein the content of the first particles is higher than the content of the second particles.
[11] The resin composition according to any one of [1] to [10], wherein the ratio of the content of the first particles to the content of the second particles is from 55/45 to 99/1 in terms of a mass ratio as expressed by first particles/second particles.
[12] The resin composition according to any one of [1] to [11], wherein the melting point of the non-fluorinated thermoplastic resin is higher than or equal to the melting point of the second tetrafluoroethylene polymer and lower than the melting point of the first tetrafluoroethylene polymer.
[13] The resin composition according to any one of [1] to [12], wherein the total content of the non-fluorinated thermoplastic resin, the first tetrafluoroethylene polymer and the second tetrafluoroethylene polymer is 60.0 mass% or higher relative to the entire resin composition.
[14] The resin composition according to any one of [1] to [13], wherein the content of the non-fluorinated thermoplastic resin is from 65.0 to 95.0 mass% relative to the entire resin composition.
[15] A molded body formed from the resin composition as defined in any one of [1] to [14].

### ADVANTAGEOUS EFFECTS OF INVENTION

According to the present invention, there are provided a resin composition formable into a molded body excellent in friction properties such as wear resistance and heat resistance and a molded body.

### DESCRIPTION OF EMBODIMENTS

The meanings and definitions of terms in the present invention are as follows. "Non-fluorinated" means containing no fluorine atom.

The "melting point" is a temperature corresponding to the maximum value of the melting peak of a polymer as measured by differential scanning calorimetry (DSC).

"Melt-formable" means having melt flowability.

"Having melt flowability" means that, at a temperature higher by 20°C or more than the melting point of a polymer, there is a temperature at which the melt flow rate of the polymer becomes 0.1 to 1000 g/10 min.

The "melt flow rate" is a melt mass flow rate (MFR) as specified by JIS K7210-1:2014 (corresponding International Organization for Standardization ISO 1133-1:2011). Hereinafter, the melt flow rate is also referred to as MFR.

The "glass transition temperature" is a temperature corresponding to the maximum value of the tanδ peak as measured by dynamic mechanical analysis (DMA). Hereinafter, the glass transition temperature is also referred to as Tg.

The "average particle size" means a particle size at the 50% cumulative volume on a cumulative curve obtained by taking the total volume of the volume-based particle size distribution as 100%, that is, a volume-based cumulative 50% particle size (D50). The D50 of particles is measured by dispersing particles in water and analyzing the particles by laser diffraction/scattering with the use of a laser diffraction/scattering particle size distribution analyzer ("LA-920 measuring apparatus" manufactured by HORIBA, Ltd.). Hereinafter, the average particle size is also referred to as D50.

The "average dispersed particle size" is a value obtained by freeze fracturing a resin composition or a molded body thereof, observing a cross section of the resin composition or the molded body with a scanning electron microscope (SEM), measuring the maximum size (domain size) of domains (dispersed particles) of a first tetrafluoroethylene polymer from the SEM image and taking an average of the twenty largest values of the domain sizes in the image.

The "arithmetic mean roughness Ra" is measured according to JIS B0601:1994 under conditions of a measurement length: 4.0 mm, a measurement speed: 0.30 mm/s and a cutoff value λc: 0.8 mm.

"Units" in a polymer means atomic groups based on a monomer as formed by polymerization of the monomer. The units may be those formed directly by polymerization or may be those partially modified to another structure by processing of the polymer. Hereinafter, units based on a monomer a are also simply referred to as "monomer a units".

"to" indicating the range of numerical values means that values before and after it are included as lower limit value and upper limit value.

A resin composition according to the present invention (hereinafter also referred to as "present composition") contains a non-fluorinated thermoplastic resin, a first tetrafluoroethylene polymer (hereinafter also referred to as "first F polymer") and a second tetrafluoroethylene polymer (hereinafter also referred to as "second F polymer") having a melting point higher than or equal to 260°C and lower than a melting point of the first tetrafluoroethylene polymer, wherein, relative to the total mass of the non-fluorinated thermoplastic resin, the first tetrafluoroethylene polymer and the second tetrafluoroethylene polymer, the content of the first tetrafluoroethylene polymer is from 4.0 to 32.0 mass%, and the content of the second tetrafluoroethylene polymer is from 0.5 to 10.0 mass%, and wherein the resin composition is obtained by melt-mixing a mixed powder of first particles of the first tetrafluoroethylene polymer (hereinafter also simply referred to as "first particles") and second particles of the second tetrafluoroethylene polymer (hereinafter also simply referred to as "second particles") with a powder of the non-fluorinated thermoplastic resin.

The present composition is excellent in friction properties such as wear resistance and heat resistance. From the present composition, it is easy to obtain a molded body with such properties. The reason for this is not always clear, but is assumed as follows.

In the present composition, the mixed powder containing the first particles and the second particles, both of which are of fluorinated resins, is prepared in advance. This mixed powder is used for melt-mixing with the powder of the non-fluorinated thermoplastic resin. In other words, used is the powder in which the first F polymer and the second F polymer, i.e. different kinds of fluorinated resins are in a state of being regarded as interacting with each other by agglomeration or affinity.

It is considered that, by the second F polymer having a lower melting point than that of the first F polymer, the second F polymer starts flowing during the melt-mixing while maintaining affinity with the first F polymer, and smoothly gets affinity with the non-fluorinated thermoplastic resin. It is considered that, as a result, the dispersed particle size of the entire fluorinated resins in the obtained molded body becomes small and fine by dispersion of the first F polymer in the non-fluorinated thermoplastic resin or the second F polymer whereby there is formed a strong matrix structure between the entire fluorinated resins and the non-fluorinated thermoplastic resin.

It is accordingly considered that, even though the amounts of the first and second F polymers mixed with the non-fluorinated thermoplastic resin are small, the properties such as wear resistance of the fluorinated resins can be highly imparted to the molded body of the composition.

The above-mentioned mechanism of action is more remarkably effected in the case where the after-explained preferable embodiments of the present invention with respect to the non-fluorinated thermoplastic resin, the particle sizes of the first and second particles and the like are adopted and in the case where the melting point of the non-fluorinated thermoplastic resin is close to and higher than that of the first F polymer.

Examples of the non-fluorinated thermoplastic resin include a polyamide, a polyetherimide, a polyetherimide, a thermoplastic polyimide, a polyamide imide, an aromatic polyester, a semi-aromatic polyester, an aromatic polyester amide, an unmodified or modified polyphenylene ether (PPE), a polyarylene sulfide (such as a polyphenylene sulfide (PPS)), a polyarylene sulfone (such as a polysulfone (PSU)), a polyether sulfone (PESU), a polyarylsulfone (PPSU), a polyarylene ether ketone (such as PEK, PEEK, PEKK or PEEKK), a polyacetal, a polycarbonate, and the like. The above-mentioned non-fluorinated thermoplastic resins are classified as heat-resistant resins.

The non-fluorinated thermoplastic resin preferably has a melting point of 150°C or higher, more preferably 240°C or higher. The upper limit of the melting point of the non-fluorinated thermoplastic resin is not particularly limited and is, for example, 420°C.

The non-fluorinated thermoplastic resin may be used alone or in combination of two or more kinds thereof.

Among others, a polyamide, a polyamide imide, a polyarylene ether ketone and a polyarylene sulfide are preferred in that the present composition and the molded body formed from the present composition are low in friction and more excellent in heat resistance and friction properties such as wear resistance. More preferred is a polyamide.

Examples of the polyamide include: aliphatic polyamides such as polyamide 6 (PA6), polyamide 11 (PA11), polyamide 12 (PA12), polyamide 46 (PA46), polyamide 66 (PA66), polyamide 610 (PA610), polyamide 612 (PA612), polyamide 1010 (PA1010), a polyamide 6/66 copolymer (PA6/66) and a polyamide 6/66/610 copolymer (PA6/66/610); semi-aromatic polyamides such as polyamide 6T, polyamide 9T, polyamide 10T, polyamide 11T, polyamide MXD6 (MXD6) and a polyamide 6/6T copolymer; and aromatic polyamides. Herein, T means a terephthalic acid. The polyamide may be used alone or in combination of two or more kinds thereof.

Among others, semi-aromatic polyamide resins are preferred in terms of heat resistance. More preferred are polyamide 9T, polyamide 10T and polyamide 11T.

In the case where the second F polymer has an oxygen-containing polar group as mentioned later, it is preferable that the non-fluorinated thermoplastic resin has a functional group, such as an amide group or a hydroxy group, capable of reacting with the oxygen-containing polar group from the viewpoint of further improvement in affinity between the non-fluorinated thermoplastic resin and the second F polymer. This functional group may be contained in either a main chain, a side chain or a terminal of the non-fluorinated thermoplastic resin.

The non-fluorinated thermoplastic resin preferably has a melting point of higher than 265°C, more preferably 280°C or higher, still more preferably 300°C or higher. The upper limit of the melting point of the non-fluorinated thermoplastic resin is, for example, 420°C or lower.

It is preferable that the melting point of the non-fluorinated thermoplastic resin is higher than or equal to the melting point of the second F-polymer and lower than the melting point of the first F polymer.

When the melting point of the non-fluorinated thermoplastic resin is in the above range, the above-mentioned mechanism of action is more easily effected whereby the present composition and the molded body formed from the present composition are easy to show excellent friction properties such as wear resistance and heat resistance.

Each of the first F polymer and the second F polymer is a polymer containing units (hereinafter also referred to as "TFE units") based on tetrafluoroethylene (hereinafter also referred to as "TFE").

The first F polymer is preferably polytetrafluoroethylene (PTFE) containing TFE units in an amount of 99.5 mol% or more relative to all the units constituting the first F polymer. In other words, the first F polymer can be a homopolymer of TFE or a copolymer containing TFE units and any other monomer units copolymerizable with TFE in an amount of less than 0.5 mol% relative to all the units.

The melting point of the first F polymer is preferably from 310 to 390°C and is more preferably higher than 320°C and lower than or equal to 380°C. In the case where the first F polymer is PTFE having no melting point, such as PTFE that does not get deformed even when left with a temperature rise up to e.g. 400°C, the thermal decomposition initiation temperature of 390°C is regarded as the melting point of the first F polymer.

Examples of the second F polymer includes a polymer (ETFE) containing TFE units and units based on ethylene, a polymer containing TFE units and units based on propylene, a polymer (EFEP) containing TFE units, units based on ethylene and units based on propylene, a polymer (PFA) containing TFE units and units (PAVE units) based on perfluoro(alkyl vinyl ether) (PAVE), a polymer (FEP) containing TFE units and units based on hexafluoropropylene and a polymer containing TFE units and units based on fluoroalkylethylene (FAE).

As PAVE, CF₂=CFOCF₃ (hereinafter also referred to as "PMVE"), CF₂=CFOCF₂CF₃, CF₂=CFOCF₂CF₂CF₃ (hereinafter also referred to as "PPVE"), CF₂=CFOCF₂CF₂CF₂CF₃ and CF₂=CFO(CF₂)₈Fare preferred. More preferred are PMVE and PPVE.

As FEA, for example, there may be mentioned CH₂=CH(CF₂)₂F, CH₂=CH(CF₂)₃F, CH₂=CH(CF₂)₄F, CH₂=CF(CF₂)₃H, CH₂=CF(CF₂)₄H and the like.

Among others, the second F polymer is preferably a polymer containing units based on at least one kind of comonomer selected from the group consisting of PAVE, hexafluoropropylene and FAE, more preferably any selected from PFA and FEP, still mor preferably PFA. This polymer may further contain units based on another comonomer.

It is preferable that the second F polymer has a functional group. Examples of the functional group include: an oxygen-containing polar group such as a hydroxy-containing group, a carbonyl-containing group, a cyclic acetal group, a diol residue or an epoxy group; and a nitrogen-containing polar group such as an amino group.

Above all, the second F polymer preferably has an oxygen-containing polar group, more preferably a hydroxy-containing group or a carbonyl-containing group, still more preferably a carbonyl-containing group. In such a case, it is easy to improve affinity between the non-fluorinated thermoplastic resin and the second F polymer in the present composition.

The hydroxy-containing group is preferably an alcoholic hydroxy-containing group, more preferably -CF₂CH₂OH or -C(CF₃)₂OH.

The carbonyl-containing group is preferably a carboxyl group, an alkoxycarbonyl group, an amide group, an isocyanate group, a carbamate group (-OC(O)NH₂), an acid anhydride residue (-C(O)OC(O)-), an imide residue (-C(O)NHC(O)- or the like), a formyl group, a halogenoformyl group (-C(=O)-X (where X is a halogen atom)), an urethane group(-NHC(O)O-), a carbamoyl group (-C(O)-NH₂), an ureido group (-NH-C(O)-NH₂), an oxamoyl group (-NH-C(O)-C(O)-NH₂) or a carbonate group (-OC(O)O-), more preferably an acid anhydride residue.

In the case where the second F polymer has an oxygen-containing polar group, the number of oxygen-containing polar groups in the second F polymer is preferably from 10 to 5000, more preferably from 100 to 3000, per 1×10⁶ carbons of the main chain. Herein, the number of oxygen-containing polar groups in a F polymer can be quantified by polymer composition analysis or by a method described in WO2020/145133.

The oxygen-containing polar group may be contained in the units based on the monomer in the second F polymer or may be contained in a terminal group of the main chain of the second F polymer, and is preferably contained in the units based on the monomer in the second F polymer. As examples in which the oxygen-containing polar group is contained in a terminal group of the main chain of the second F polymer, there may be mentioned: the second F polymer having the oxygen-containing polar group as a terminal group derived from a polymerization initiator, a chain transfer agent or the like; and the second F polymer obtained by plasma treatment or ionizing radiation treatment of a polymer containing TFE units.

As a monomer containing a carbonyl-containing group, itaconic anhydride (hereinafter also referred to as IAH), citraconic anhydride (hereinafter also referred to as CAH) and 5-NORBORNENE-2,3-DICARBOXYLIC ANHYDRIDE (hereinafter also referred to as "NAH") are preferred. More preferred is NAH.

The second F polymer is preferably a polymer containing TFE units and PAVE units and having a carbonyl-containing group, more preferably a polymer containing TFE units, PAVE units and units based on a monomer having a carbonyl-containing group in amounts of 90 to 99 mol%, 0.99 to 9.97 mol% and 0.01 to 3 mol%, respectively, relative to all the units. Specific examples of such a second F polymer include those disclosed in WO2018/16644.

The melting point of the second F polymer is higher than or equal to 260°C and is lower than the melting point of the first F polymer. When the melting point of the second F polymer is 260°C or higher, the present composition is excellent in heat resistance. The melting point of the second F polymer is preferably 275°C or higher, more preferably 280°C or higher. The melting point of the second F polymer is preferably 350°C or lower, more preferably 320°C or lower. When the melting point of the second F polymer is 350°C or lower, the present composition is excellent in formability.

The melting point of the second F polymer can be adjusted according to the proportion of the TFE units, the proportion of the comonomer units, and the like.

The glass transition temperature of the second F polymer is preferably 50°C or higher, more preferably 75°C or higher. The glass transition temperature of the second F polymer is preferably 150°C or lower, more preferably 125°C or lower.

The melt flow rate (MFR; 372°C, load 49N) of the second F polymer is preferably from 1 to 100 g/10 min, more preferably from 3 to 50 g/10 min.

In the present composition, the melting point of the second F polymer is higher than or equal to 260° and lower than the melting point of the first F polymer as mentioned above. Further, it is preferable that: the melting point of the first F polymer is higher than 320°C and lower than or equal to 380°C; and the melting point of the second F polymer is higher than or equal to 260°C and lower than 320°C. In addition, the difference between the melting point of the first F polymer and the melting point of the second F polymer is preferably from 20°C to 75°C, more preferably from 20°C to 60°C.

When the melting point of the first F polymer and the melting point of the second F polymer satisfy the above relationship, it is easy to improve the dispersibility of the first and second F polymers, i.e. fluorinated resins in the non-fluorinated thermoplastic resin by the above-mentioned mechanism of action; and the preset composition and the molded body formed from the present composition are easy to show excellent friction properties such as wear resistance and heat resistance.

As materials of the present composition, the average particle size (D50) of the first particles is preferably greater than the average particle size of the second particles.

The D50 of the first particles is preferably from 1 to 100 µm, more preferably 10 to 75 µm. The D50 of the second particles is preferably from 0.1 to 50 µm, more preferably from 1 to 10 µm.

Further, the ratio of the D50 of the first particles to the D50 of the second particles is preferably from 2 to 50, more preferably from 5 to 25. In this case, the molded body formed from the present composition is easy to show excellent friction properties such as wear resistance and heat resistance by the above-mentioned mechanism of action.

In the present composition, the content of the first particles is preferably higher than the content of the second particles. More specifically, the ratio of the content of the first particles to the content of the second particles in terms of mass ratio expressed by first particles/second particles is preferably from 55/45 to 99/1, more preferably from 70/30 to 99/1, still more preferably from 80/20 to 95/5.

When the ratio of the content of the first particles to the content of the second particles is in the above range, the effect of improvement of wear resistance by the first F polymer and the effect of improvement of dispersibility by the second F polymer are sufficiently obtained whereby the present composition and the molded body formed from the present composition are easy to show excellent friction properties such as wear resistance and heat resistance.

In the present composition, the first F polymer and the second F polymer, the content of the first F polymer in the present composition is from 4.0 to 32.0 mass%, preferably from 7.0 to 26.0 mass%, more preferably 10.0 to 20.0 mass%, relative to the to the total mass of the non-fluorinated thermoplastic resin. When the content of the first F polymer is in the above range, it is easy to obtain the effect of improvement of friction properties such as wear resistance by the first F polymer.

Further, in the present composition, the content of the second F polymer is from 0.5 to 10.0 mass%, preferably from 0.75 to 5.0 mass%, more preferably 1.0 to 3.5 mass%, relative to the total mass of the non-fluorinated thermoplastic resin, the first F polymer and the second F polymer. When the content of the second F polymer is higher than or equal to the above-mentioned lower limit, the dispersibility of the first F polymer is good. When the content of the second F polymer is lower than or equal to the above-mentioned upper limit, it is easy to exhibit excellent properties (such as mechanical properties) of the non-fluorinated thermoplastic resin.

The content of the non-fluorinated thermoplastic resin is preferably from 65.0 to 95.5 mass%, more preferably from 70.0 to 90.0 mass%, still more preferably 75.0 to 85.0 mass%, relative to the entire present composition. When the content of the non-fluorinated thermoplastic resin is higher than or equal to the above-mentioned lower limit, it is easy to exhibit excellent properties (such as mechanical properties) of the non-fluorinated thermoplastic resin. When the content of the non-fluorinated thermoplastic resin is lower than or equal to the above-mentioned upper limit, the present composition is excellent in friction properties such as wear resistance.

The total content of the non-fluorinated thermoplastic resin, the first F polymer and the second F polymer relative to the entire present composition is preferably 60.0 mass% or higher, more preferably 65.0 mass% or higher, still more preferably 70 mass%, and may be 100 mass%. When the total content of the non-fluorinated thermoplastic resin, the first F polymer and the second F polymer is 60.0 mass% or higher, the present composition is likely to be excellent in formability; and the molded body formed from the present composition are easy to show excellent friction properties such as wear resistance and heat resistance.

The present composition preferably contains, relative to the total mass of the present composition, 65.0 to 95.5 mass% of the non-fluorinated thermoplastic resin, 4.0 to 32.0 mass% of the first F polymer and 0.5 to 10.0 mass% of the second F polymer, more preferably 70.0 to 90.0 mass% of the non-fluorinated thermoplastic resin, 7.0 to 26.0 mass% of the first F polymer and 0.75 to 5.0 mass% of the second F polymer, still more preferably 75.0 to 85.0 mass% of the non-fluorinated thermoplastic resin, 10.0 to 20.0 mass% of the first F polymer and 1.0 to 3.5 mass% of the second F polymer.

In the present composition, the first F polymer is dispersed in the non-fluorinated thermoplastic resin or the second F polymer by the above-mentioned mechanism of action. In the present composition, the average dispersed particle size of the first F polymer is preferably from 1.0 to 40.0 µm, more preferably from 3.0 to 30.0 µm, still more preferably from 5.0 to 20 µm. When the average dispersed particle size of the first F polymer is in the above range, the present composition and the molded body formed from the present composition are easy to show excellent friction properties such as wear resistance and heat resistance.

The preset composition may contain other materials such as a filler, a plasticizer, a weathering agent, an antioxidant, a thermal stabilizer, a lubricant, an antistatic agent, a whitening agent, a coloring agent, a conductive agent, a mold release agent, a surface treatment agent and a flame retardant, as needed within the range that does not impair the effects of the present invention.

Among others, the present composition preferably contains carbon fiber, glass fiber or the like as an inorganic filler from the viewpoint of improvement in mechanical properties of the molded product formed from the present composition.

It is preferable that, when the present composition is press-formed into the molded body (hereinafter also referred to as molded body M) of 80 mm × 80 mm × thickness 1 mm by preheating at 320°C for 8 minutes and pressing with a pressure of 5 MPa for 3 minutes, the arithmetic mean roughness of a surface of the molded body M is 0.08 µm or smaller. When the arithmetic mean roughness of the surface of the molded body M is 0.08 µm or smaller, more excellent friction properties such as wear resistance are obtained.

The arithmetic mean roughness of the surface of the molded body M is more preferably 0.05 µm or smaller, still more preferably 0.03 µm or smaller. The lower limit of the arithmetic mean roughness of the surface of the molded body M is not particularly limited and is, for example, 0.01 µm.

Further, the amount of wear measured for the molded body M is preferably 0.005 cm³ or less, more preferably 0.0025 cm³ or less. When the wear amount is less than or equal to the above-mentioned upper limit, the present composition is useful for applications where friction properties such as wear resistance are required.

Furthermore, the dynamic friction coefficient measured for the molded body M is preferably 0.35 or lower, more preferably 0.3 or lower. When the dynamic friction coefficient is lower than or equal to the above-mentioned upper limit, the present composition is useful for applications where friction properties such as wear resistance are required.

The wear amount and the dynamic friction coefficient are measured by a Matsubara abrasion measurement method according to JIS K7218 as will be explained later in Examples.

The present resin composition is melt-mixing a mixed powder of the first particles and the second particles with a powder of the non-fluorinated thermoplastic resin. The mixed powder of the first particles and the second particles can be prepared in advance with the use of a mixing machine such as a tumbler mixer or a Henschel mixer.

The melt-mixing can be performed with the use of a known melt-mixing machine such as a Banbury mixer, a roll mixer, a Brabender, a single screw extruder, a twin screw extruder or a kneader.

The mixed powder of the first particles and the second particles, the non-fluorinated thermoplastic resin and the other materials contained as needed may be mixed in advance with the use of a mixing machine such as a tumbler mixer or a Henschel mixer or may be directly put into the melt-mixing machine.

The melt-mixing temperature is preferably 300 to 330°C. The melt-mixing time is preferably 5 to 15 minutes.

The present invention is also directed to a molded product formed from the present composition. The present composition can be subjected to forming by a compression molding method such as a hot molding method or a free baking method, an injection molding method, a transfer molding method, or the like.

The molded body formed from the present composition are excellent in friction properties such as wear resistance and heat resistance, and thus are useful for articles such as sliding members where such properties are required.

### EXAMPLES

The present invention will be now described in further detail with reference to Examples. However, it should be understood that the present invention is by no means restricted thereto.

### «Production and Evaluations (1) of Resin Compositions»

### [Materials Used]

Thermoplastic resin A-1: polyamide 9T, manufactured by Kuraray Co. Ltd., tradename: GENESTAR N1000A, melting point: 300°C, specific gravity: 1.14.

Thermoplastic resin A-2: polyamide 66, manufactured by Asahi Kasei Corporation, tradename: LEONA 1500 X11, melting point: 265°C, specific gravity: 1.14.

Polymer B-1: polymer containing 99.5 mol% or more of TFE units, powdery form, manufactured by AGC Inc., tradename: FluonPTFE L169J, average particle size: 18 µm, specific gravity: 2.15.

Polymer C-1: polymer synthetized by a known method and containing 97.9 mol% of TFE units, 0.1 mol% of NAH units and 2.0 mol% PPVE units, melting point: 300°C, average particle size: 3 µm, specific gravity: 2.13.

### [Ex. 1 and 4 to 5]

The thermoplastic resin A-1, the polymer B-1 and the polymer C-1 were put into Labo Plastomill (model number: 4C150) manufactured by Toyo Seiki Seisaku-sho, Ltd. at ratios shown in Table 1 and melt-mixed under conditions of screw rotation speed: 100 rpm, set temperature of resin: 320°C and mixing time: 10 minutes, thereby obtaining a resin composition. Herein, the polymer B-1 and the polymer C-1 were mixed in advance at blend ratios shown in Table 1 to obtain a mixed powder; and then, the mixed powder was put into the above-mentioned Labo Plastomill.

A press sheet of 80 mm × 80 mm × thickness 1 mm was obtained by press- forming the obtained resin composition with a melt hot press machine manufactured by Tester Sangyo Co., Ltd. under conditions of temperature: 320°C, preheating: 8 minutes, pressure: 5 MPa and press time: 3 minutes.

Herein, the surface of the mold of the melt hot press machine had an arithmetic mean roughness Ra of 1.6 µm. The forming was performed using a release film (Upilex 125S manufactured by UBE Corporation) whose surface had an arithmetic mean roughness Ra of 1.1 nm.

### [Ex. 2 and 3]

The thermoplastic resin A-2, the polymer B-1 and the polymer C-1 were put into Labo Plastomill (model number: 4C150) manufactured by Toyo Seiki Seisaku-sho, Ltd. at ratios shown in Table 1 and melt-mixed under conditions of screw rotation speed: 50 rpm, set temperature of resin: 300°C and mixing time: 5 minutes, thereby obtaining a resin composition.

Herein, the polymer B-1 and the polymer C-1 were mixed in advance at blend ratios shown in Table 1 to obtain a mixed powder; and then, the mixed powder was put into the above-mentioned Labo Plastomill.

A press sheet of 80 mm × 80 mm × thickness 1 mm was obtained by press-forming the obtained resin composition with a melt hot press machine manufactured by Tester Sangyo Co., Ltd. under conditions of temperature: 300°C, preheating: 8 minutes, pressure: 5 MPa and press time: 3 minutes.

### [Evaluations]

The following evaluations are performed on the formed press sheet.

### <Wear Amount and Dynamic Friction Coefficient>

A test piece was obtained by cutting the press sheet into a size of 40 mm × 40 mm.

The test piece was tested by a Matsubara abrasion measurement method (circular flat surface type, O-ring type) according to JIS K7218 with the use of a friction and wear tester manufactured by Orientec Co., Ltd., to measure the wear amount and dynamic friction coefficient of the test piece. In the test, a ring (material: S45Cs (1.5S), contact area: 2 cm²) as a counterpart member was brought into contact with the test piece at room temperature (23°C) under conditions of pressure: 0.7 MPa, rotation speed: 0.5 m/sec and test time: 30 seconds.

### <Average Dispersed Particle Size>

The press sheet was freeze fractured, and then, the cross section of the press sheet was observed with SEM (JSM-IT700HR manufactured by JEOL Ltd.). The magnification was set at 300 times in Ex. 1 to 3 and 1000 times in Ex. 4 and 5. From the SEM image, the maximum size (domain size) of the domains (dispersed particles) of the polymer B-1 was measured. The average of the twenty largest values of the domain sizes in the image was determined as an average dispersed particle size.

Herein, it was confirmed by energy dispersive X-ray spectroscopy (EDS) using JSM-IT700HR manufactured by JEOL Ltd. that each of the domain was formed of fluorine-containing polymer.

### <Arithmetic Mean Roughness Ra>

The arithmetic mean roughness Ra of the surface of the press sheet was measured according to JIS B0601 with the use of a contact-type surface roughness measuring instrument (SURFCOM manufactured by Tokyo Seimitsu Co., Ltd.) under conditions of measurement length: 4.0 mm, measurement speed: 0.30 mm/s and cutoff value λc: 0.8 mm.

### <Heat Resistance (Appearance)>

The appearance of the press sheet was visually observed, and the heat resistance of the press sheet was evaluated according to the following criteria.
×: Taking the entire surface of the press sheet as 100 area%, a part of the press sheet discolored into dark brown or black occupied 50 area% or more, and the appearance of the press sheet was non-uniform.
○: Taking the entire surface of the press sheet as 100 area%, a part of the press sheet discolored into dark brown or black occupied less than 50 area%.

**[Table 1]**

| | Ex. 1 | Ex. 2 | Ex. 3 | Ex. 4 | Ex. 5 |
|---|---|---|---|---|---|
| Thermoplastic Resin A-1 (mass%) | 82.5 | - | - | 82.5 | 82.5 |
| Thermoplastic Resin A-2 (mass%) | - | 82.5 | 82.5 | - | - |
| Polymer B-1 (mass%) | 17.5 | 17.5 | 15.7 | 15.7 | 14.0 |
| Polymer C-1 (mass%) | - | - | 1.8 | 1.8 | 3.5 |
| Wear Amount (cm³) | 0.0085 | 0.0152 | 0.0085 | 0.0025 | 0.0022 |
| Dynamic Friction Coefficient | 0.38 | 0.58 | 0.55 | 0.29 | 0.23 |
| Average Dispersed Particle size of Polymer B (µm) | 51.5 | 53.8 | 40.8 | 15.5 | 13.4 |
| Arithmetic Mean Roughness Ra (µm) | 0.61 | 0.08 | 0.05 | 0.03 | 0.05 |
| Heat Resistance (Appearance) | ○ | × | × | ○ | ○ |

In Ex. 1 in which no polymer C-1 was contained, the press sheet was high in dynamic friction coefficient and wear amount and poor in friction properties. The reason for this is considered to be that the dispersibility of the polymer B-1 into the thermoplastic resin A-1 was so poor that the surface roughness of the press sheet was large.

In Ex. 2 and 3 in which the thermoplastic resin A-2 with a melting point of 260°C was used, more than half of the surface of the press sheet was discolored into dark blown or black due to thermal deterioration whereby the appearance of the press sheet was uneven in color.

In Ex. 4 and 5, as compared to Ex. 1, the press sheet was low in dynamic friction coefficient and wear amount and excellent in friction properties. As compared to Ex. 2 and 3, the decoloring of the press sheet due to thermal deterioration was suppressed whereby the press sheet was excellent in heat resistance.

### «Production and Evaluations (2) of Resin Compositions»

### [Ex. 6 to 13]

A mixed powder in which particles 1 and particles 2 were mixed in advance at blend ratios shown in Table 2 and a non-fluorinated thermoplastic resin were put into Labo Plastomill (model number: 4C150) manufactured by Toyo Seiki Seisaku-sho, Ltd. at ratios shown in Table 2 and melt-mixed under conditions of screw rotation speed: 50 rpm, set temperature of resin: 300°C and mixing time: 5 minutes, thereby obtaining a resin composition. The details of the particles 1, the particles 2 and the non-fluorinated thermoplastic resin used in each Ex. are as shown in the margin of Table 2.

In Ex. 10, however, a resin composition was obtained by putting the particles 1 and the particles 2 separately into the Labo Plastomill, without mixing in advance, and mixing the materials under the above-mentioned conditions.

A press sheet of 80 mm × 80 mm × thickness 1 mm was obtained by press-forming the obtained resin composition with a melt hot press machine manufactured by Tester Sangyo Co., Ltd. under conditions of temperature: 300°C, preheating: 8 minutes, pressure: 5 MPa and press time: 3 minutes.

The wear amount of the obtained press sheet was measured in the same manner as in Ex. 2 and 3. The wear resistance of the press sheet was evaluated according to the following criteria and shown in Table 2.

In Ex. 10, however, the resin composition was obtained by putting the particles 1 and the particles 2 separately into the Labo Plastomill, without mixing in advance, and mixing the materials under the above-mentioned conditions.

### <Evaluation Criteria of Wear Resistance>

A: The wear amount was less than 0.003 cm³.
B: The wear amount was more than 0.003 cm³ and less than or equal to 0.006 cm³.
C: The wear amount was more than 0.007 cm³ and less than or equal to 0.010 cm³.
D: The wear amount exceeded 0.010 cm³.

**[Table 2]**

| | | Ex. 6 | Ex. 7 | Ex. 8 | Ex. 9 | Ex. 10 | Ex. 11 | Ex. 12 | Ex. 13 |
|---|---|---|---|---|---|---|---|---|---|
| Non-fluorinated Thermoplastic Resin (mass%) | A-1 | 82.5 | 82.5 | 82.5 | 82.5 | 82.5 | 82.5 | 82.5 | 82.5 |
| First Particles (mass%) | Particles 11 | 15.7 | 15.7 | 15.7 | 15.7 | 15.7 | 17.4 | 8.8 | 15.7 |
| Second Particles (mass%) | Particles 21 | 1.8 | | | | | | | |
| | Particles 22 | | 1.8 | | | 1.8 | 0.1 | 8.7 | |
| | Particles 23 | | | 1.8 | | | | | |
| | Particles 24 | | | | 1.8 | | | | |
| | Particles 25 | | | | | | | | 1.8 |
| Wear Resistance | | A | B | C | C | D | D | D | D |

| | | | | | | | | | |
|---|---|---|---|---|---|---|---|---|---|
| A-1: Polyamide 9T, manufactured by Kuraray Co. Ltd., tradename: GENESTAR N1000A, melting point: 300°C Particles 11: Particles of PTFE (melting point: 327°C, D50: 18 µm) Particles 21: Particles of PFA containing NAH units and formed with oxygen-containing polar group (melting point: 300°C, D50: 3 µm) Particles 22: Particles of PFA with no oxygen-containing polar group (melting point: 305°C, D50: 4 µm) Particles 23: Particles of PFA with no oxygen-containing polar group (melting point: 305°C, D50: 13 µm) Particles 24: Particles of FEP (melting point: 270°C, D50: 2 µm) Particles 25: Particles of FEP (melting point: 250°C, D50: 4 µm) | | | | | | | | | |

### INDUSTRIAL APPLICABILITY

Using the resin composition according to the present invention, there is obtained a molded body excellent in friction properties and heat resistance.

The entire disclosure of Japanese Patent Application No. 2022-045241 filed on March 22, 2022 including specification, claims and summary is incorporated herein by reference in its entirety.

## Claims

1. A resin composition, comprising: a non-fluorinated thermoplastic resin; a first tetrafluoroethylene polymer; and a second tetrafluoroethylene polymer having a melting point higher than or equal to 260°C and lower than a melting point of the first tetrafluoroethylene polymer,
wherein, relative to the total mass of the non-fluorinated thermoplastic resin, the first tetrafluoroethylene polymer and the second tetrafluoroethylene polymer, the content of the first tetrafluoroethylene polymer is from 4.0 to 32.0 mass%, and the content of the second tetrafluoroethylene polymer is from 0.5 to 10.0 mass%, and
wherein the resin composition is obtained by melt-mixing a mixed powder of first particles of the first tetrafluoroethylene polymer and second particles of the second tetrafluoroethylene polymer with a powder of the non-fluorinated thermoplastic resin.

2. The resin composition according to Claim 1, wherein the first tetrafluoroethylene polymer is polytetrafluoroethylene.

3. The resin composition according to Claim 1, wherein the second tetrafluoroethylene polymer contains units based on at least one kind of comonomer selected from the group consisting of perfluoro(alkyl vinyl ether), hexafluoropropylene and fluoroalkylethylene.

4. The resin composition according to Claim 1, wherein the second tetrafluoroethylene polymer has an oxygen-containing polar group.

5. The resin composition according to Claim 1, wherein the melting point of the first tetrafluoroethylene polymer is higher than 320°C and lower than or equal to 380°C, and the melting point of the second tetrafluoroethylene polymer is higher than or equal to 260°C and lower than 320°C.

6. The resin composition according to Claim 1, wherein the difference between the melting point of the first tetrafluoroethylene polymer and the melting point of the second tetrafluoroethylene polymer is from 20°C to 60°C.

7. The resin composition according to Claim 1, wherein the average particle size of the first particles 1 to 100 µm.

8. The resin composition according to Claim 1, wherein the average particle size of the first particles is greater than the average particle size of the second particles.

9. The resin composition according to Claim 1, wherein the ratio of the average particle size of the first particles to the average particle size of the second particles is from 2 to 50 in terms of a particle size ratio as expressed by first particles/second particles.

10. The resin composition according to Claim 1, wherein the content of the first particles is higher than the content of the second particles.

11. The resin composition according to Claim 1, wherein the ratio of the content of the first particles to the content of the second particles is from 55/45 to 99/1 in terms of a mass ratio as expressed by first particles/second particles.

12. The resin composition according to Claim 1, wherein the melting point of the non-fluorinated thermoplastic resin is higher than or equal to the melting point of the second tetrafluoroethylene polymer and lower than the melting point of the first tetrafluoroethylene polymer.

13. The resin composition according to Claim 1, wherein the total content of the non-fluorinated thermoplastic resin, the first tetrafluoroethylene polymer and the second tetrafluoroethylene polymer is 60.0 mass% or higher relative to the entire resin composition.

14. The resin composition according to Claim 1, wherein the content of the non-fluorinated thermoplastic resin is from 65.0 to 95.0 mass% relative to the entire resin composition.

15. A molded body formed from the resin composition as defined in any one of Claims 1 to 14.
